# EUROPÄISCHE PATENTSCHRIFT

(11) **EP 2 273 506 B1**
(45) Veröffentlichungstag und Bekanntmachung des Hinweises auf die Patenterteilung: **27.08.2014**
(21) Anmeldenummer: 10185640.9
(22) Anmeldetag: 30.06.1998
(51) Int. Cl.: G11C 7/16

(54) **Aufnahme-, Verarbeitungs- und Übertragungsvorrichtung zum Speichern, Verarbeiten und Übertragen von Audio-Signalen**
Recording, processing and transfer device for storing, processing and transferring audio signals
Dispositif d'enregistrement, de traitement et de transmission pour le stockage, le traitement et la transmission de signaux audio

(30) Priorität: 01.07.1997 DE 19727938
(43) Veröffentlichungstag der Anmeldung: 12.01.2011
(62) Teilanmeldung aus: 05003651.6
(73) Patentinhaber: MAYAH Communications GMBH, 85399 Hallbergmoos (DE)
(72) Erfinder: Wiese, Detlef, 85354, Freising (DE); Rimkus, Jörg, 24943, Flensburg (DE)
(74) Vertreter: Eisenführ Speiser

(56) Entgegenhaltungen:
- EP-A2- 0 706 114
- DE-A1- 4 207 447
- DE-A1- 19 513 952
- US-A- 5 359 698

## Beschreibung

Die Erfindung betrifft eine Aufnahme-, Verarbeitungs- und Übertragungsvorrichtung eines ersten Typs zum Speichern, Verarbeiten und Übertragen von Audio-Signalen, mit einem analogen Audio-Signaleingang, insbesondere einem Mikrophon oder einem Mikrophoneingangsanschluß, einer Konvertierungseinrichtung zum Verarbeiten analoger Audio-Signale in digitale Audio-Daten und einem Speichermedium zum Speichern der digitalen Audio-Daten; zweitens eine Aufnahme-, Verarbeitungs- und Übertragungsvorrichtung eines zweiten Typs zum Speichern, Verarbeiten und Übertragen von Audio-Daten, mit einem Eingangsanschluß für digitale Audio-Daten und einem Speichermedium zum Speichern der digitalen Audio-Daten; und drittens eine Wiedergabevorrichtung zum Wiedergeben von Audiosignalen mit einem Kopfhörer oder Kopfhöreranschluß, einer Konvertierungseinrichtung zum Verarbeiten digitaler Audio-Daten in analoge Audiosignale und einem Speichermedium zum Speichern der digitalen Audio-Daten.

Es sind derartige Vorrichtungen beispielsweise aus EP-A-0 706 114 bekannt, bei welchen analoge Signale digitalisiert und anschließend auf einem digitalen Speichermedium gespeichert werden. Solche Vorrichtungen können in der Regel ebenfalls digital eingespeiste Audio-Daten direkt auf das digitale Speichermedium aufnehmen. Außerdem sind solche Vorrichtungen bekannt, bei welchen die digital gespeicherten Audio-Daten nach einer Digital/Analog-Wandlung über einen analogen Audio-Ausgang, insbesondere einem Kopfhörer oder Kopfhöreranschluß, wiedergegeben werden können.

Derartige Vorrichtungen sind mit unterschiedlichem Funktionsumfang beispielsweise im HiFi-Bereich eingesetzt. Je nach Ausstattung der Vorrichtung eignen sich derartige HiFi-Geräte zur Aufnahme, Verarbeitung und/oder Wiedergabe der Audiosignale. In Abhängigkeit von dem genutzten Aufnahmestandard werden unterschiedliche Speichermedien benötigt. Bei dem DAT-Standard (Digital Audio Tape) und bei dem DCC-Standard (digitale Compact-Cassette) ist das Speichermedium zum Speichern der digitalen und datenreduzierten Audio-Daten ein Magnetband. Bei einem weiteren Standard, der MD (Mini-Disc), werden magneto-optische Speicherplatten als Speichermedium zum Speichern der digitalen, unter psychoakustischen Gesichtspunkten datenreduzierten Audio-Daten verwendet.

Bei den gattungsgemäßen Aufnahme-, Verarbeitungs-, Übertragungs- und Wiedergabevorrichtungen werden die Audio-Signale in digitalisierter Form auf dem Speichermedium gespeichert und können durch Abspielen bei gleichzeitig erneutem Aufnehmen mittels einer weiteren Vorrichtung verarbeitet und/oder bearbeitet werden. Das Speichermedium, auf dem die Audio-Daten gespeichert sind, kann aus der Vorrichtung entnommen und für eine spätere Verwendung verwahrt werden, wenn die gespeicherten Audio-Daten momentan nicht benötigt werden. Durch Löschen und Überspielen nicht mehr benötigter Audio-Daten oder die Verwendung eines noch nicht genutzten Speichermediums können neue Audio-Daten gespeichert werden.

Für den Fall, daß die gespeicherten Audio-Daten an einem anderen Ort benötigt werden, wird überwiegend das Speichermedium, wie beispielsweise die Cassette oder Disc, an den gewünschten Ort gebracht. Dort angekommen, wird das Speichermedium in eine entsprechende Wiedergabevorrichtung eingelegt, so daß die gespeicherten digitalen Audio-Daten verarbeitet oder nach einer Digital/Analog-Wandlung als analoge Audio-Signale wiedergegeben werden können.

Aufgabe dieser weiteren Erfindung ist es, die gattungsgemäßen Vorrichtungen derart weiterzubilden, daß insbesondere die Verarbeitung und Übertragung von Audio-Daten beschleunigt und die Bedienung der Vorrichtung erleichtert wird.

Diese Aufgabe wird bei den Aufnahme-, Verarbeitungs- und Übertragungsvorrichtungen erfindungsgemäß durch die Vorrichtungen nach den Ansprüchen 1 und 3 gelöst.

Die Audio-Daten können über eine Schnittstelle in einfacher Weise übertragen werden. Die digitalen Audio-Daten können dabei in einem ersten Schritt zu einem Computer übertragen werden, um anschließend in einem zweiten Schritt über eine Daten-Fernübertragungsleitung oder mittels eines elektronischen Mail-Systems an weiter entfernte Orte übermittelt zu werden. Es ist dadurch vorteilhafterweise nicht mehr nötig, das Speichermedium selbst von einem Ort an den anderen zu transportieren. Die Zeitspanne von dem Zeitpunkt einer Aufnahme eines Audio-Signals, beispielsweise mittels einer Vorrichtung des ersten oder zweiten Typs, bis zum Zeitpunkt einer Wiedergabe des aufgenommenen Audio-Signals, beispielsweise mittels einer Vorrichtung des dritten Typs, wird erheblich reduziert. Außerdem besteht nicht mehr die Gefahr, daß das Speichermedium während des Transportes der Audio-Daten beschädigt wird oder verloren geht.

Die erfindungsgemäße Ausführung kann mit einer kabellosen oder kabelbehafteten Schnittstelle ausgeführt werden.

Darüber hinaus werden bei der erfindungsgemäßen Vorrichtung zahlreiche feinmechanischen Bauteile eingespart, welche ein Auswechseln des Speichermediums bei den bekannten Vorrichtungen ermöglichen. Durch die Einsparung der feinmechanischen Bauteile wird der Fertigungsaufwand der Vorrichtung verringert. Gleichzeitig erhöht sich die Zuverlässigkeit der Vorrichtung, da insbesondere die feinmechanischen Bauteile einer Vorrichtung Ursache für Ausfälle und Probleme sind.

In einer bevorzugten Ausführungsform weist die erfindungsgemäße Vorrichtung des ersten Typs einen analogen Hochpegel-Eingangsanschluß und/oder einen digitalen Eingangsanschluß für Audiosignale auf. Diese Anschlüsse ermöglichen, daß die erfindungsgemäße Vorrichtung ebenfalls Signale von herkömmlichen analogen oder digitalen Aufnahme- und Wiedergabevorrichtungen aufnehmen, verarbeiten und übertragen kann.

Besonders bevorzugt sind bei den erfindungsgemäßen Vorrichtungen des ersten und zweiten Typs eine Konvertierungseinrichtung zum Verarbeiten digitaler Audio-Daten in analoge Audio-Daten vorgesehen, um eine Wiedergabe der gespeicherten digitalen Audio-Daten als analoge Audio-Signale zu ermöglichen.

In einer zweckmäßigen Weiterbildung weisen die erfindungsgemäßen Vorrichtungen einen Kopfhörer oder wenigstens einen Kopfhörerausgangsanschluß auf, damit sich die gespeicherten Audio-Daten nach einer Digital/Analog-Wandlung akustisch wiedergeben lassen.

Der benötigte Speicherplatz zur Speicherung der digitalen Audio-Daten läßt sich besonders bevorzugt dadurch reduzieren, daß die digitalen Audio-Daten in ein datenreduziertes Format konvertiert werden. Dazu weisen die erfindungsgemäßen Vorrichtungen eine Konvertierungseinrichtung zum Konvertieren der digitalen Audio-Daten in ein datenreduziertes Format, z.B. nach dem MPEG, AAC, AC3 oder ATRAC-Standard, auf.

Die nachfolgend beschriebenen, bevorzugten Ausführungsformen beziehen sich sowohl auf die erfindungsgemäßen Aufnahme-, Verarbeitungs- und Übertragungsvorrichtungen des ersten und zweiten Typs als auch auf die erfindungsgemäße Wiedergabevorrichtung.

Bei den erfindungsgemäßen Vorrichtungen ist das Speichermedium bevorzugt ein FlashRAM oder ein dynamisches RAM. Durch den Einsatz derartiger RAM-Bausteine werden weitere feinmechanische Bauteile eingespart. Dadurch erhöht sich die Zuverlässigkeit der Vorrichtungen aus den vorstehend genannten Gründen weiter. Darüber hinaus ist durch den Einsatz von RAM-Bausteinen eine Verwendung eines Motors zum Transport eines Magnet-Speicher-Bandes oder einer magneto-optischen Platte unnötig, so daß während des Betriebs außerdem noch Energie eingespart wird.

Die Schnittstelle für eine kabellose Übertragung der digitalen Audio-Daten zu einer vorrichtungsexternen Verarbeitungseinrichtung ist besonders bevorzugt für eine bidirektionale Datenübertragung vorgesehen. Es lassen sich somit nicht nur digitale Daten von den Vorrichtungen auf externe Verarbeitungseinrichtungen übertragen, sondern ebenfalls von den externen Verarbeitungseinrichtungen auf die erfindungsgemäßen Vorrichtungen.

Bevorzugt handelt es sich bei der Schnittstelle um eine Infrarot-Schnittstelle, welche eine hohe Datenübertragungsrate bei gleichzeitig guter Übertragungsqualität bietet.

Bei einer weiteren bevorzugten Ausführungsform der Vorrichtungen werden die digitalen Audio-Daten in dem datenreduzierten Format in dem Speichermedium gespeichert. Dies ermöglicht eine bessere Ausnutzung der in dem Speichermedium vorhandenen Speicherkapazität. Besonders bevorzugt werden die digitalen Audio-Daten ebenfalls in dem datenreduzierten Format über die kabellose Übertragungsschnittstelle übertragen. Hierdurch wird die Übertragung der Audio-Daten zu einer vorrichtungsexternen Verarbeitungseinrichtung deutlich beschleunigt.

Desweiteren ist bevorzugt an den Vorrichtungen ein analoger Hochpegel-Ausgangsanschluß und/oder digitaler Ausgangsanschluß für Audio-Signale vorgesehen. Dies ermöglicht eine Datenübertragung in analoger oder digitaler Form an bekannte Aufnahme- und Wiedergabevorrichtungen.

Bevorzugt weisen die erfindungsgemäßen Vorrichtungen ebenfalls eine Konvertierungseinrichtung zum Dekodieren datenreduzierter Audio-Daten auf, damit neben der Datenreduktion vor dem Speichern der Audio-Daten ebenfalls ein Dekodieren der datenreduzierten Audio-Daten möglich ist, bevor diese an den digitalen Ausgangsanschluß oder an die Digital/Analog-Verarbeitungseinheit übermittelt werden.

Für eine Eingabe von Steuerbefehlen zur Steuerung der Vorrichtungen verfügen die erfindungsgemäßen Vorrichtungen bevorzugt über eine Eingabeeinrichtung. Um entsprechende Status- oder Steuerinformationen anzuzeigen, weisen die Vorrichtungen ebenfalls bevorzugt eine Anzeigeeinrichtung auf.

Damit die erfindungsgemäße Aufnahme-, Verarbeitungs- und Übertragungsvorrichtungen und die erfindungsgemäße Wiedergabevorrichtung vielseitig einsetzbar sind, sind diese vorteilhafterweise tragbar, in einem kompakten und leichten Gehäuse, ausgeführt.

Vorteilhafte Weiterbildungen der Erfindung sind durch die Merkmale der Unteransprüche gekennzeichnet.

Im Folgenden wird diese weitere Erfindung anhand der Zeichnung beispielhaft erläutert. Es zeigen:
- Fig. 1: ein Blockschaltbild der erfindungsgemäßen Vorrichtung;
- Fig. 2: eine schematische Darstellung einer Eingabeeinrichtung der Vorrichtung nach Fig. 3; und
- Fig. 3: ein Zeit-Darstellungsdiagramm einer Audio-Aufnahme.

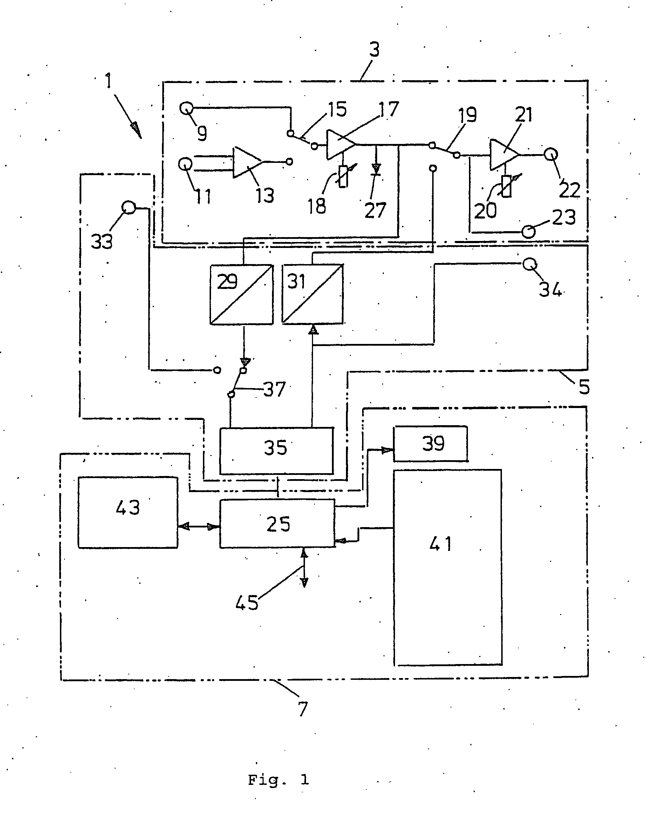

Die in Fig. 1 dargestellte Vorrichtung 1 umfaßt drei Vorrichtungsbereiche, nämlich einen analogen Signalverarbeitungsbereich 3, einen digitalen Signalverarbeitungsbereich 5 und einen digitalen Schnittstellenbereich 7.

Der analoge Signalverarbeitungsbereich 3 umfaßt einen Line-In-Eingangsanschluß 9, einen Mikrophoneingangsanschluß 11, welcher mit einem Mikrophonvorverstärker 13 verbunden ist, einen ersten Umschalter 15, mit welchem ein nachfolgender Eingangsverstärker 17 entweder mit dem Mikrophonvorverstärker oder dem Line-In-Eingangsanschluß verbunden wird, einen zweiten Umschalter 19, mit welchem eine Quelle für einen nachfolgenden Kopfhörerverstärker 21 bzw. Line-Out-Ausgangsanschluß 23 ausgewählt werden kann und einen Kopfhörerausgangsanschluß 22.

Ein an dem Mikrophoneingangsanschluß 11 anliegendes Mikrophonsignal wird durch den Mikrophonvorverstärker 13 auf den Pegel angehoben, welcher für den Line-In-Eingangsanschluß 9 typisch ist. Der erste Umschalter 15 wählt aus, ob das Mikrophonsignal oder das am Line-In-Eingangsanschluß 9 liegende Signal als Eingangssignal weitergeleitet wird. Der erste Umschalter 15 wird durch einen Mikrocontroller 25 gesteuert, welcher funktional dem digitalen Schnittstellenbereich 7 zuzuordnen ist. Der Eingangsverstärker 17 dient zum Einpegeln des Eingangssignals, wobei der Pegel des Eingangssignals mittels einer im Eingangsverstärker 17 vorgesehene Pegelsteuerung 18 über den Mikrocontroller 25 erfolgt. Eine nachgeschaltete Peak-LED 27 kann dabei vor einer Übersteuerung eines nachgeschalteten, zu dem digitalen Signalverarbeitungsbereich 5 gehörenden, Analog/Digital-Wandlers 29 warnen.

Der zweite Umschalter 19, welcher ebenfalls über den Mikrocontroller 25 gesteuert wird, wählt aus, welches analoge Signal dem Kopfhörerverstärker 21 und gleichzeitig dem Line-Out-Ausgangsanschluß 23 zugeführt wird. Dies kann entweder das von dem Eingangsverstärker 17 kommende Signal oder das analoge Signal eines Digital/Analog-Wandlers 31 sein, welcher ebenfalls Bestandteil des digitalen Signalverarbeitungsbereichs 5 ist.

Der Kopfhörerverstärker 21 dient zur Versorgung eines angeschlossenen externen Kopfhörers (nicht dargestellt), wobei die Lautstärke mittels einer in Kopfhörerverstärker integrierten Pegelsteuerung 20 ebenfalls durch den Mikrocontroller 25 erfolgt.

Der digitale Signalverarbeitungsbereich 5 umfaßt den Analog/Digital-Wandler 29, den Digital/Analog-Wandler 31, einen digitalen Eingangsanschluß 33, einen digitalen Ausgangsanschluß 34, den digitalen Signalprozessor 25 (DSP) und einen dritten Umschalter 37.

Der Analog/Digital-Wandler wandelt das von dem Eingangsverstärker 17 kommende Signal in ein lineares Digitalsignal um, welches an den digitalen Signalprozessor 35 übermittelt wird. Der Digital/Analog-Wandler 31 wandelt ein von dem digitalen Signalprozessor 35 stammendes lineares Digitalsignal, welches ebenfalls am digitalen Ausgangsanschluß 34 anliegt, in ein analoges Ausgangssignal um, welches einem Anschluß des zweiten Umschalters 19 zugeführt wird. Als Analog/Digital-Wandler 29 und Digital/Analog-Wandler 31 können beispielsweise die 24-Bit-Wandler von Crystal eingesetzt werden. Der digitale Eingangsanschluß 33 und der digitale Ausgangsanschluß 34 entsprechen in ihren Eigenschaften dem aus der Consumer-Technik stammenden Sony/Philips-Standard.

Der digitale Signalprozessor 35 ist für die Wandlung von und in ein datenreduziertes Format verantwortlich. Dabei wird insbesondere das MPEG-Audio-Format favorisiert, da dieses ein bereits weit verbreitetes Audio-Format darstellt. Als digitaler Signalprozessor 35 eignet sich beispielsweise der Motorola-56302-DSP-Baustein. Der dritte Umschalter 37 verbindet den Signaleingang des digitalen Signalprozessors 35 entweder mit dem Ausgang des Analog/Digital-Wandlers 29 oder mit dem digitalen Eingangsanschluß 33. Eine Steuerung des dritten Umschalters 37 erfolgt dabei wiederum durch den Mikrocontroller 25.

Der digitale Schnittstellenbereich 7 umfaßt eine Anzeigeeinrichtung 39, eine Eingabeeinrichtung 41, ein Speichermedium 43, als kabellose Schnittstelle eine Infrarot-Schnittstelle 45 und den Mikrocontroller 25. Auch die Ausführung einer Schnittstelle mit Kabel ist selbstverständlich möglich.

Die Anzeigeeinrichtung 39 kann dabei durch ein LC-Compact-Display mit einer Punktmatrix, beispielsweise durch das PG12232-D von Actron, ausgeführt sein. Die Ansteuerung der Anzeigeeinrichtung 39 erfolgt dabei direkt durch den Mikrocontroller 25. Die Eingabeeinrichtung kann aus Drucktastern bestehen, welche über eine Matrix an den Mikrocontroller 25 angeschlossen sind. Das Speichermedium 43, bei welchem es sich entweder um ein Flash-RAM oder ein dynamisches RAM (SD-RAM) handelt, sollte mindestens eine Speicherkapazität von 30 Megabyte aufweisen. Das Speichermedium 43 ist dabei fest in die Vorrichtung integriert, wobei ein nachträglicher Ausbau nicht vorgesehen oder möglich ist. Eine Erweiterung der Speicherkapazität des Speichermediums 43 kann allerdings durch nachträgliches Einsetzen anderer Speicherbausteine durch geeignetes Personal erfolgen.

Die Infrarot-Schnittstelle 45 dient zum Laden und Entladen der Audio-Daten und arbeitet direkt mit einer externen Verarbeitungsvorrichtung, beispielsweise mit einem PersonalComputer (PC) (nicht dargestellt), zusammen. Die Infrarot-Schnittstelle entspricht dabei bevorzugt dem IrDA 1.1 Standard und weist eine Datenübertragungsrate von 115 kBit/s bis 4 MBit/s auf. Bei einer Anbindung über einen PC hat die Vorrichtung 1 den Status eines Slave-Device. Die Initiative zum Verbindungsaufbau erfolgt immer vom PC aus, d.h. die Schnittstelle ist zwar stets empfangsbereit, sendet aber nur, wenn sie aufgefordert wird. Während die Vorrichtung mit dem PC kommuniziert, wird diese vom PC aus mit Hilfe eines geeigneten Computer-Programmes gesteuert. Als Baustein für die Infrarot-Schnittstelle kann beispielsweise die Sharp RY5HD01 IrDA Communication Unit verwendet werden.

Der Mikrocontroller 25 steuert die unterschiedlichen Bauteile der Vorrichtung 1. Als Baustein eignet sich für den Mikrocontroller 25 beispielsweise ein Typ der 8051 er Familie (8-Bit-Mikrocontroller) bis hin zu den Motorola 16-Bit-Controllern der 68000er Serie.

Als Energieversorgung (nicht dargestellt) ist bei der Vorrichtung 1 eine (wiederaufladbare) Batterie vorgesehen. Bei der Verwendung von dynamischen RAM-Bausteinen versorgt die Batterie diese auch im Stand-By-Modus. Um einen Spannungsausfall während eines Auswechselns der Batterie zu verhindern, ist im Fall, daß dynamische RAM-Bausteine eingesetzt sind, eine zusätzliche Batterie, beispielsweise eine Knopfzelle, vorgesehen. Bei der Verwendung von Flash-RAM-Bausteinen ist diese Maßnahme nicht erforderlich. Des Weiteren ist an der Vorrichtung 1 eine Möglichkeit vorgesehen, Energie über ein externes Netzteil zuzuführen. Bei der Auswahl aller Bauteile wird stets auf einen möglichst geringen Energieverbrauch geachtet. Bauteile für eine Versorgungsspannung von 3 V sind bevorzugt einzusetzen.

Im Aufnahmemodus werden in Abhängigkeit der Schalterstellung des dritten Umschalters 37 entweder die digitalen Audio-Daten des digitalen Eingangsanschlusses 33 oder die digitalen Audio-Daten von dem Analog/Digital-Wandler 29 an den Eingang des digitalen Signalprozessors 35 geschaltet. Die digitalen Audio-Daten werden durch den digitalen Signalprozessor 35 in ein datenreduziertes Format, beispielsweise in einen MPEG-Datenstrom, umgewandelt und über einen Ausgang des digitalen Signalprozessors 35 an den Mikrocontroller 25 weitergeleitet und von diesem in Blöcken in dem Speichermedium 43 abgelegt. Dabei wird die freie Speicherkapazität des Speichermediums 43 ständig überprüft und in der Anzeigeeinrichtung 39 dargestellt.

Sollen Audio-Daten wiedergegeben werden, werden zuerst die Audio-Daten blockweise aus dem Speichermedium 43 ausgelesen und durch den Mikrocontroller 25 an den digitalen Signalprozessor 35 übergeben. Eine Ausgabe der Audio-Daten erfolgt nun über den digitalen Ausgangsanschluß 34 und nach einer Digital/Analog-Wandlung als analoges Audiosignal ebenfalls über den Line-Out-Ausgangsanschluß 23 und den Kopfhörerausgangsanschluß 22.

Beim Senden und Empfangen von Daten über die Infrarot-Schnittstelle 45 werden die digitalen Audio-Daten in dem datenreduzierten Format, beispielsweise im MPEG-Format, an einen angeschlossenen PC übertragen oder von diesem empfangen.

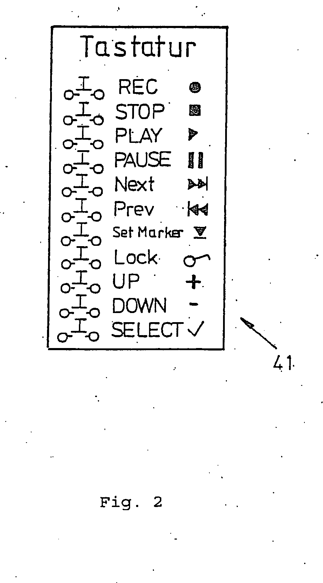

Fig. 2 zeigt schematisch eine Eingabeeinrichtung 41, welche auch in der Vorrichtung 1 aus Fig. 1 eingesetzt werden kann. Die Eingabeeinrichtung besteht aus Drucktastern, die über eine Matrix an einen Mikrocontroller angeschlossen sind. Die Eingabeeinrichtung umfaßt in der dargestellten Ausführungsform eine REC-, STOP-, PLAY-, PAUSE-, NEXT-, PREV-, SET MARKER-, LOCK-, UP-, DOWN- und eine SELECT-Taste. Im Funktionsablauf der Vorrichtung 1 ist im Wesentlichen jeder Taste ein Modus zugeordnet, der den Betriebszustand bezeichnet, in dem sich die Vorrichtung befindet, nachdem die entsprechende Taste gedrückt wurde. Die Vorrichtung kann in ihrem Funktionsablauf insbesondere einen REC-, STOP-, PLAY-, REC-PAUSE-, PLAY-PAUSE, NEXT-, PREV-, SET MARKER-, LOCK-, UP-, DOWN- oder SELECT-Modus einnehmen. Weitere Modi sind möglich, wenn die Vorrichtung mittels einer Menu-Steuerung betätigt wird. In Abhängigkeit des aktuellen Modus sind nur bestimmte Drucktaster aktiviert und können zur Steuerung der Vorrichtung benutzt werden.

Die REC-Taste läßt sich im REC-PAUSE- oder STOP-Modus betätigen und dient zum Starten einer Aufnahme. Jede neue Aufnahme wird als ein neuer Beitrag gekennzeichnet. Während die Aufnahme läuft, befindet sich die Vorrichtung 1 im REC-Modus. Im REC-Modus lassen sich die STOP-Taste und die SET MARKER-Taste betätigen. Durch Betätigen der STOP-Taste wird die aktuelle Aufnahme beendet; die Vorrichtung nimmt den STOP-Modus ein. Das Drücken der SET MARKER-Taste, welches auch im PLAY-Modus möglich ist, markiert die Stelle, die gerade durch die Vorrichtung aufgenommen (REC-Modus) oder wiedergegeben (PLAY-Modus) wird. Eine derartig gesetzte Markierung wird zusammen mit den Audio-Daten in der Speichereinrichtung gespeichert und dient zum leichten Wiederfinden der entsprechend markierten Stellen.

Ein Druck auf die PAUSE-Taste unterbricht die Aufnahme und bringt die Vorrichtung in den REC-PAUSE-Modus. Dieser Modus kann die Vorrichtung ebenfalls einnehmen, wenn im STOP-Modus gleichzeitig die REC- und die PAUSE-Taste gedrückt werden. In diesem Modus ruht die Aufnahme, es ist aber möglich ein Eingangssignal auf einen gewünschten Pegel auszusteuern. Durch Drücken der STOP-Taste wird in den STOP-Modus, durch Drücken der REC-Taste oder der PAUSE-Taste in den REC-Modus zurückgekehrt. Wird aus dem REC-PAUSE-Modus in den REC-Modus gesprungen, wird kein neuer Beitrag kreiert, sondern die Aufnahme des aktuellen Beitrages fortgesetzt.

Die PLAY-Taste läßt sich im PLAY-PAUSE- oder STOP-Modus betätigen und dient zum Starten einer Wiedergabe. Während die Wiedergabe läuft befindet sich die Vorrichtung 1 im PLAY-Modus. Im PLAY-Modus lassen sich die STOP-Taste und wie vorstehend beschrieben die SET MARKER-Taste betätigen. Durch das Betätigen der STOP-Taste wird die Wiedergabe beendet; die Vorrichtung nimmt wieder den STOP-Modus ein. Ein Druck auf die PAUSE-Taste unterbricht die Wiedergabe und bringt die Vorrichtung in den PLAY-PAUSE-Modus. Durch Drücken der STOP-Taste wird in den STOP-Modus, durch Drücken der PLAY-Taste oder der PAUSE-Taste in den PLAY-Modus zurückgekehrt.

Die NEXT-Taste und die PREV-Taste sind im STOP-, PLAY- und PLAY-PAUSE-Modus aktiviert und dienen dazu, von einem gespeicherten Beitrag zum nächsten oder vorhergehenden zu springen. Im PLAY-Modus kann bei der Betätigung der PLAY-Taste auch ein schneller Vorlauf mit akustischer Kontrolle vorgesehen sein, bei welchem jeder n-te Audio-Frame wiedergegeben wird.

Die LOCK-Taste, die auch als rastender Schalter ausgeführt sein kann, dient dazu, alle Funktionen und die Infrarot-Schnittstelle zu sperren.

Mit den UP-, DOWN-, und SELECT-Tasten werden weitere Funktionen, beispielsweise die Pegelsteuerung, das Löschen einzelner oder aller Beiträge, das Springen zu einzelnen Markierungen, das Löschen einzelner oder aller Markierungen und das Setzen oder Verändern einer Zeitüberwachung für einzelne Beiträge betätigt. Die Auswahl der einzelnen Funktionen erfolgt dabei im Wesentlichen menu-gesteuert.

Die Drucktaster sind in drei Gruppen unterteilt, wobei jeder Gruppe eine Prioritätsstufe zugeordnet ist. In der ersten Gruppe Prio_1 befinden sich die Drucktaster, die beim Bedienen 'blind' gefunden und bedient werden. Dies sind die RECORD-, die STOP- und die SET-MARKER-Taste. Die zweite Gruppe Prio_2 umfaßt die Drucktaster, die mit einer festen Funktion belegt sind. Darunter fallen die PLAY-, die PAUSE-, die NEXT, die PREV-und die LOCK-Taste. Die dritte Gruppe Prio_3 bilden die Multifunktions-Drucktaster, denen in Abhängigkeit des Betriebszustandes des Systems oder der Menu-Steuerung unterschiedliche Funktionen zugeordnet sind. Die momentan diesen Drucktastern zugeordneten Funktionen werden entsprechend in der Anzeigeeinrichtung angezeigt. Zu dieser Gruppe zählen die UP-, die DOWN- und die SELECT-Taste. Statt der UP- und der DOWN-Taste könnte auch ein Winkelgeber-Bedienrad eingesetzt werden.

Um zu gewährleisten, daß die Drucktaster der Gruppe Prio_1 'blind' gefunden und bedient werden können, sind diese für einen Benutzer leicht zugänglich an der Vorrichtung angeordnet. Auch die Größe und Form dieser Drucktaster kann ein leichtes Finden und Betätigen erleichtern. Die Drucktaster der Gruppen Prio_2 und Prio_3 sind so angeordnet, daß diese nicht versehentlich betätigt werden können oder elektronisch deaktiviert. Auch eine mechanische Abdeckung dieser Tasten kann vorgesehen sein.

Es ist ferner möglich und zweckmäßig, wenn die erfindungsgemäße Aufnahme-, Verarbeitungs- und Übertragungsvorrichtung bereits vor Betätigung der als REC-Taste ausgebildeten Aufnahmeeingabeeinrichtung in den Aufnahmezustand versetzt ist. Das bedeutet, daß Audiosignale aufgenommen und nach dem FIFO-Prinzip (Fist-In-First-Out) für einen vorbestimmten Zeitraum (Vorlaufzeit) gespeichert werden, wenn die REC-Taste noch gar nicht betätigt worden ist. Beispielsweise kann vorgesehen werden, daß stets die Audioinformationen eines vorbestimmten vergangenen Zeitraums, z.B. der letzten fünf Minuten, aufgezeichnet und in dem Speicher festgehalten werden. Wird nun die REC-Taste gedrückt, werden die Audio-Daten, die während des Zeitraums vor Betätigung der REC-Taste aufgenommen wurden, weiter gespeichert und bilden einen Teil der gesamten Aufnahme, welche durch die REC-Taste bestimmt ist. Die vorstehende Maßnahme hat den Vorteil, daß dann, wenn der Benutzer der Aufzeichnungseinrichtung einmal die REC-Taste zu spät gedrückt haben sollte, dennoch gewährleistet ist, daß die gesamte gewünschte Aufnahme zustande kommt und somit trotz verspäteter Betätigung der REC-Taste keine Audioinformationen der gewünschten Aufzeichnung verpaßt werden. Selbstverständlich ist es auch möglich, daß die Vorlaufzeit, also die Zeiteinheit der ständig gespeicherten Informationen vom Benutzer auch individuell mittels der Eingabemittel einstellbar ist. Regelmäßig ist die Voraufnahmezeit erheblich kürzer als die Zeit, für die in der Aufnahmeeinrichtung Audiosignale gespeichert werden können. Wenn beispielsweise in der Aufnahmevorrichtung Audiosignale für eine Stunde gespeichert werden können, kann die Voraufnahmezeit im Bereich von 30 sek bis 5 Minuten liegen. In Figur 5 ist dargestellt, wie sich dann im zeitlichen Aufriß der Inhalt mehrerer Aufzeichnungsbeiträge darstellt, wenn mehrmals und zu verschiedenen Zeiten durch Betätigung der REC-Taste Aufzeichnungen getätigt wurden.

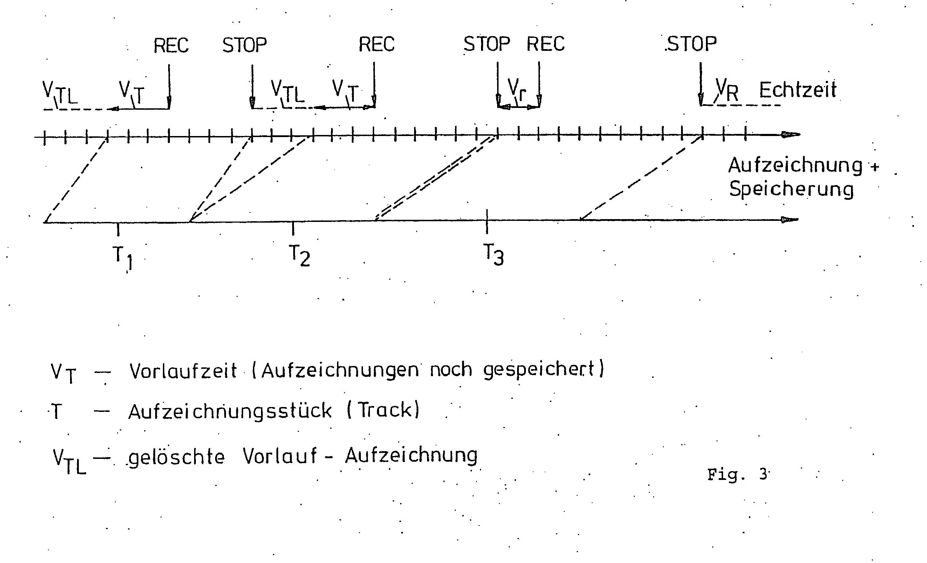

Aus der Figur 3 ergibt sich, daß dann, wenn zu verschiedenen Zeiten die REC-Taste betätigt worden ist, stets auch ein kurzer Zeitraum vor der Betätigung der REC-Taste-VT-Vorlaufzeit (Aufzeichnung noch gespeichert) die Aufzeichnung wie das eigentliche Aufzeichnungsstück T (Track) erhalten bleibt. Die Aufnahme, welche vor der Vorlaufzeit liegt, wird nach dem FIFO-Prinzip gelöscht. FIFO bedeutet hierbei, daß die einkommenden Audio-Daten eines bestimmten Zeitraums nach dem First-In-First-Out-Prinzip gespeichert und gelöscht werden.

Sowohl die Zeitpunkte und Zeiträume VTL, VT als auch REC können mittels der Eingabemittel mit einer Markierung (Index) versehen werden, damit sie wieder auffindbar sind und auch der tatsächliche Track-Anfang editierbar ist.

Als weiteres Merkmal der Aufnahme-, Verarbeitungs- und Übertragungseinrichtung ist ein schneller Vor-/Rücklauf vorgesehen. Hierbei ist es auch möglich, verschiedene Stufen eines schnellen Vor-/Rücklaufs vorzusehen. Beim schnellen Vor-/Rücklauf wird nur jedes n-te Frame wiedergegeben, wobei n eine Zahl größer als 2 ist. Beim schnellen Vor- bzw. Rücklauf erhält auch der Decoder einen schnelleren Arbeitstakt, so daß das Tonsignal in einer höheren Tonhöhe abgespielt wird. Es ist aber auch möglich, beim schnellen Vor- und Rücklauf die Tonhöhe der Wiedergabe beizubehalten bzw. die Tonhöhe des Tonsignals nicht unter Abtastung der Original-Tonhöhe anzupassen.

Schließlich ist es mit den Eingabemitteln der Aufnahme- und Übertragungsvorrichtung auch möglich, den aufzuzeichnenden Audiosignalen Informationen über Adreßdaten, wie beispielsweise ISDN- oder e-mail-Daten einzugeben, so daß diese Adreßdateninformationen, die den aufzuzeichnenden Audiosignalen zugeordnet sind, von dem Mikrocontroller 25 oder der externen Verarbeitungseinrichtung ausgewertet werden können, so daß beispielsweise die aufgezeichneten Aufzeichnungsinformationen automatisch an die gewünschte Adresse versendet werden.

Die beschriebene Aufnahme-, Verarbeitungs- und Übertragungseinrichtung eignet sich in besonders guter Weise als Aufzeichnungsgerät für Journalisten, welche die Audioaufzeichnung mit möglichst guter Aufnahmequalität schnell und sicher an ihre Redaktion versenden möchten, damit der Beitrag so schnell wie möglich in den Medien publiziert werden kann.

## Patentansprüche

1. Aufnahme-, Verarbeitungs- und Übertragungsvorrichtung (1) zum Speichern, Verarbeiten und Übertragen von Audio-Signalen, mit einem analogen Audio-Signaleingang (9; 11), insbesondere einem Mikrofon oder einem Mikrofoneingangsanschluß (11), einer Konvertierungseinrichtung (29) zum Verarbeiten analoger Audio-Signale in digitale Audio-Daten und einem Speichermedium (43) zum Speichern der digitalen Audio-Daten, mit den weiteren Merkmalen, daß das Speichermedium (43) für einen ständigen Verbleib in der Vorrichtung (1) vorgesehen ist und die Vorrichtung (1) eine Schnittstelle (45) für eine Übertragung der digitalen Audio-Daten zu einer vorrichtungsexternen Verarbeitungseinrichtung aufweist,
**dadurch gekennzeichnet, daß** die Aufnahmevorrichtung Mittel um Audiosignale aufzunehmen und nach dem FIFO-Prinzip für einen bestimmten Zeitraum zu speichern, bevor einen hierfür vorgesehene Aufnahmeeingabeeinrichtung betätigt worden ist, aufweist.

2. Vorrichtung nach Anspruch 1, mit einem analogen Hochpegel-Eingangsanschluß (9) und/oder einem digitalen Eingangsanschluß (33) für Audio-Signale.

3. Aufnahme-, Verarbeitungs- und Übertragungsvorrichtung (1) zum Speichern, Verarbeiten und Übertragen von Audio-Daten, mit einem Eingangsanschluß (33) für digitale Audio-Daten und einem Speichermedium (43) zum Speichern der digitalen Audio-Daten, mit den weiteren Merkmalen, daß das Speichermedium (43) für einen ständigen Verbleib in der Vorrichtung (1) vorgesehen ist und die Vorrichtung (1) eine Schnittstelle (45) für eine kabellose oder kabelbehaftete Übertragung der digitalen Audio-Daten zu einer vorrichtungsexternen Verarbeitungseinrichtung aufweist,
**dadurch gekennzeichnet, daß** die Aufnahmevorrichtung Mittel um Audiosignale aufzunehmen und nach dem FIFO-Prinzip für einen vorbestimmten Zeitraum zu speichern, bevor eine hierfür vorgesehene Aufnahmeeingabeeinrichtung betätigt worden ist, aufweist.

4. Vorrichtung nach einem der vorstehenden Ansprüche, mit einer Konvertierungseinrichtung (31) zum Verarbeiten digitaler Audio-Daten in analoge Audio-Signale.

5. Vorrichtung nach Anspruch 4, mit einem Kopfhörer oder einem Kopfhörerausgangsanschluß (22).

6. Vorrichtung nach einem der vorstehenden Ansprüche, mit einer Konvertierungseinrichtung (35) zum Konvertieren der digitalen Audio-Daten in ein datenreduziertes Format.

7. Vorrichtung nach einem der vorhergehenden Ansprüche,
**dadurch gekennzeichnet, dass** die Vorrichtung zum Wiedergeben der Audio-Signale vorgesehen ist und einen Kopfhörer oder Kopfhöreranschluss (22), und eine Konvertierungseinrichtung (31) zum Verarbeiten der digitalen Audio-Daten in analoge Signale aufweist.

8. Vorrichtung nach einem der vorstehenden Ansprüche, mit den weiteren Merkmalen, daß das Speichermedium (43) ein FlashRAM oder ein dynamisches RAM ist, und daß bevorzugt die Schnittstelle (45) für eine bidirektionale Datenübertragung vorgesehen ist, und daß bevorzugt die Schnittstelle (45) eine Infrarot-Schnittstelle ist, und daß bevorzugt die digitalen Audio-Daten in dem datenreduzierten Format in dem Speichermedium (43) gespeichert werden, und daß bevorzugt die digitalen Audio-Daten in dem datenreduzierten Format über die kabellose Übertragungsschnittstelle (45) übertragen werden.

9. Vorrichtung nach einem der vorstehenden Ansprüche, mit einem analogen und/oder einem digitalen Audio-Ausgangsanschluß (23, 34), und vorzugsweise mit einer Konvertierungseinrichtung (35) zum Dekodieren datenreduzierter Audio-Daten und vorzugsweise mit einer Eingabeeinrichtung (41) zur Eingabe von Steuerbefehlen zur Steuerung der Vorrichtung (1).

10. Vorrichtung nach einem der vorstehenden Ansprüche, mit einer Anzeigeeinrichtung (39) zur Anzeige von Steuerinformationen.

11. Vorrichtung nach einem der vorstehenden Ansprüche, mit den weiteren Merkmalen, daß die Vorrichtung (1) tragbar ist.

12. Vorrichtung nach einem der Ansprüche 1 oder 3, mit den weiteren Merkmalen, dass für den Fall, daß die Aufnahmeeingabeeinrichtung betätigt wird, bereits aufgenommene Audiosignale Teil derjenigen Gesamtaufnahme bilden, welche durch die Betätigung der Aufnahmeeingabeeinrichtung bestimmt ist.

13. Vorrichtung nach einem der vorhergehenden Ansprüche, mit den weiteren Merkmalen, daß die Vorrichtung Mittel zur Eingabe und Speicherung von elektronischen Adreßinformationen, beispielsweise ISDN- oder e-mail-Daten, aufweist und daß die aufgezeichneten Audiosignalen zugeordneten elektronischen Adreßinformationen von der Vorrichtung oder der vorrichtungsexternen Verarbeitungseinrichtung bestimmungsgemäß auswertbar ist.

14. Vorrichtung nach einem der vorhergehenden Ansprüche, mit den weiteren Merkmalen, daß die Vorrichtung einen einstufigen oder mehrstufigen schnellen Vor- und/oder Rücklauf aufweist, bei dem nur jedes n-te Datenframe abgespielt wird und n größer als 1 ist, und daß vorzugsweise der Decoder schneller getaktet ist bzw. schneller arbeitet als bei der Normalwiedergabe und das Tonsignal mit einer höheren Tonhöhe abgespielt wird, und daß vorzugsweise beim schnellen Vor- und/oder Rücklauf des Tonsignals der Decoder schneller arbeitet bzw. schneller getastet wird als üblich und die Tonhöhe des Tonsignals durch Unterabtastung der Original-Tonhöhe angepaßt ist.

## Claims

1. Recording, processing and transmission apparatus (1) for storing, processing and transmitting audio signals, having an analog audio signal input (9; 11), in particular a microphone or a microphone input connection (11), a converting device (29) for processing analog audio signals to digital audio data and a storage medium (43) for storing the digital audio data, having the further features that the storage medium (43) is provided for permanently remaining in the apparatus (1) and the apparatus (1) has an interface (45) for transmission of the digital audio data to a processing device which is external to the apparatus,
**characterised in that** the recording apparatus has means for recording audio signals and storing them on the basis of the FIFO-principle for a determined period of time before a recording input device provided for this purpose has been actuated.

2. Apparatus according to Claim 1, having an analog high-level input connection (9) and/or a digital input connection (33) for audio signals.

3. Recording, processing and transmitting apparatus (1) for storing, processing and transmitting audio data, having an input connection (33) for digital audio data and a storage medium (43) for storing the digital audio data, having the further features that the storage medium (43) is provided for permanently remaining in the apparatus (1) and the apparatus (1) has an interface (45) for cable-less or cabled transmission of the digital audio data to a processing device which is external to the apparatus,
**characterised in that** the recording apparatus has means for recording audio signals and storing them on the basis of the FIFO-principle for a predetermined period of time before a recording input device provided for this purpose has been actuated.

4. Apparatus according to one of the preceding claims, having a converting device (31) for processing digital audio data to analog audio signals.

5. Apparatus according to Claim 4, having a headset or a headset output connection (22).

6. Apparatus according to one of the preceding claims, having a converting device (35) for converting the digital audio data into a data-reduced format.

7. Apparatus according to one of the preceding claims, **characterised in that** the apparatus is provided for reproducing audio signals and has a headset or headset connection (22), and a converting device (31) for processing digital audio data to analog signals.

8. Apparatus according to one of the preceding claims, having the further features that the storage medium (43) is a flash-RAM or a dynamic RAM, and that preferably the interface (45) is provided for bi-directional data transfer, and that preferably the interface (45) is an infra-red interface, and that preferably the digital audio data are stored in the data-reduced format in the storage medium (43), and that preferably the digital audio data are transmitted in the data-reduced format by way of the cable-less transmission interface (45).

9. Apparatus according to one of the preceding claims, having an analog and/or a digital audio output connection (23, 24), and preferably having a converting device (35) for decoding data-reduced audio data and preferably having an input device (41) for the input of control commands for controlling the apparatus (1).

10. Apparatus according to one of the preceding claims, having a display device (39) for displaying items of control information.

11. Apparatus according to one of the preceding claims, having the further features that the apparatus (1) is portable.

12. Apparatus according to one of Claims 1 or 3, having the further features that, for the situation where the recording input device is actuated, audio signals which have already been recorded form part of that overall recording which is defined by the actuation of the recording input device.

13. Apparatus according to one of the preceding claims, having the further features that the apparatus has means for the input and storage of items of electronic address information, for example ISDN or e-mail data and that the items of electronic address information associated with recorded audio signals can be evaluated in a defined manner by the apparatus or the processing device which is external to the apparatus.

14. Apparatus according to one of the preceding claims, having the further features that the apparatus has a single-stage or multi-stage fast forward and/or rewind, in which only each n-th data frame is played back and n is greater than 1, and that preferably the decoder is clocked faster or operates faster than in normal reproduction and the audio signal is played back at a higher pitch, and that preferably in fast forward and/or rewind of the audio signal the decoder operates faster or is clocked faster than usual and the pitch of the audio signal is adapted by undersampling of the original pitch.

## Revendications

1. Dispositif d'enregistrement, de traitement et de transmission (1) pour le stockage, le traitement et la transmission de signaux audio, équipé d'une entrée de signal audio analogique (9 ; 11), en particulier d'un microphone ou d'un branchement d'entrée de microphone (11), d'un système de conversion (29) pour le traitement des signaux audio analogiques en des données audio numériques et un support de stockage (43) pour le stockage des données audio numériques, présentant en outre les caractéristiques que le support de stockage (43) est prévu pour demeurer en permanence dans le dispositif (1) et que le dispositif (1) comprend une interface (45) pour une transmission des données audio numériques à un système de traitement externe au dispositif,
**caractérisé en ce que** le dispositif d'enregistrement comprend des moyens pour enregistrer des signaux audio et les stocker selon le principe FIFO pendant une certaine période de temps avant qu'un système d'entrée d'enregistrement prévu à cet effet soit actionné.

2. Dispositif selon la revendication 1, équipé d'un branchement d'entrée analogique (9) de haut niveau et/ou d'un branchement d'entrée numérique (33) pour des signaux audio.

3. Dispositif d'enregistrement, de traitement et de transmission (1) pour le stockage, le traitement et la transmission de données audio, équipé d'un branchement d'entrée (33) pour des données audio numériques et d'un support de stockage (43) pour le stockage des données audio numériques, présentant en outre pour caractéristiques que le support de stockage (43) est prévu pour demeurer en permanence dans le dispositif (1) et que le dispositif (1) comprend une interface (45) pour une transmission sans fil ou par fil des données audio numériques à un système de traitement externe au dispositif,
**caractérisé en ce que** le dispositif d'enregistrement comprend des moyens pour enregistrer des signaux audio et les stocker selon le principe FIFO pendant une certaine période de temps avant qu'un système d'entrée d'enregistrement prévu à cet effet soit actionné.

4. Dispositif selon l'une quelconque des revendications précédentes, équipé d'un système de conversion (31) pour le traitement de données audio numériques en des signaux audio analogiques.

5. Dispositif selon la revendication 4, équipé d'un casque d'écoute ou d'un branchement de casque d'écoute (22).

6. Dispositif selon l'une quelconque des revendications précédentes, équipé d'un système de conversion (35) pour la conversion des données audio numériques en un format de données réduit.

7. Dispositif selon l'une quelconque des revendications précédentes, **caractérisé en ce que** le dispositif est prévu pour la reproduction des signaux audio et qu'il comprend un casque d'écoute ou un branchement de casque d'écoute (22) et un système de conversion (31) pour le traitement des données audio numériques en des signaux analogiques.

8. Dispositif selon l'une quelconque des revendications précédentes, présentant en outre pour caractéristiques que le support de stockage (43) est une mémoire RAM Flash ou une mémoire RAM dynamique, et que, de préférence, l'interface (45) est prévue pour une transmission bidirectionnelle des données, et que, de préférence, l'interface (45) est une interface infrarouge, et que, de préférence, les données audio numériques sont stockées dans le format de données réduit sur le support de stockage (43) et que, de préférence, les données audio numériques sont transmises dans le format de données réduit par le biais de l'interface de transmission sans fil (45).

9. Dispositif selon l'une quelconque des revendications précédentes, équipé d'un branchement de sortie de données analogiques et/ou numériques (22, 34) et, de préférence, d'un système de conversion (35) pour le décodage de données audio réduites et, de préférence, d'un système d'entrée (41) pour l'entrée d'instructions de commande pour la commande du dispositif (1).

10. Dispositif selon l'une quelconque des revendications précédentes, équipé d'un système d'affichage (39) pour l'affichage d'informations de commande.

11. Dispositif selon l'une quelconque des revendications précédentes, présentant en outre pour caractéristique que le dispositif (1) est portable.

12. Dispositif selon l'une quelconque des revendications 1 et 3, présentant en outre les caractéristiques que, lorsque le système d'entrée d'enregistrement est actionné, les signaux audio déjà reçus constituent une partie de la totalité reçue, qui est évaluée par l'actionnement du dispositif d'entrée d'enregistrement.

13. Dispositif selon l'une quelconque des revendications précédentes, présentant en outre les caractéristiques que le dispositif comprend des moyens pour l'entrée et le stockage d'informations d'adresses électroniques, par exemple des données ISDN ou des données de courrier électronique et que les informations d'adresses électroniques associées aux signaux audio enregistrés peuvent être évaluées conformément à des spécifications par le dispositif ou par le système de traitement externe au dispositif.

14. Dispositif selon l'une quelconque des revendications précédentes, présentant en outre pour caractéristiques que le dispositif comprend une avance et/ou un retour rapide à un étage ou à plusieurs étages avec lequel chaque n^{ème} trame de données est lue, n étant supérieur à 1, et que, de préférence, le décodeur est cadencé plus rapidement ou fonctionne plus rapidement que lors de la reproduction normale et le signal sonore est reproduit avec des tonalités plus hautes, et que, de préférence, lors de l'avance et/ou du retour rapide du signal sonore, le décodeur fonctionne plus rapidement ou est cadencé plus rapidement que normalement et la hauteur du signal sonore est adaptée par un sous-échantillonnage de la hauteur de son originale.
